# EUROPEAN PATENT APPLICATION

(11) **EP 1 818 550 A2**
(43) Date of publication of application: **15.08.2007**
(21) Application number: 07002651.3
(22) Date of filing: 07.02.2007
(51) Int. Cl.: F16C 1/18

(54) **Cable moving member operation device**

(30) Priority: 10.02.2006 JP 2006033256
(71) Applicant: Calsonic Kansei Corporation, Tokyo (JP)
(72) Inventor: Yamamoto, Shuko, Nakano-ku, Tokyo (JP)
(74) Representative: Grünecker, Kinkeldey, Stockmair & Schwanhäusser Anwaltssozietät

(57) **Abstract**

A cable moving member operation device includes an operation pulley, a driven pulley (8) for interlocking with a moving member, a outer cable (12) having both end portions disposed in the vicinity of both of the pulleys, respectively, a control cable (15,16) inserted into the outer cable for transferring rotation of the operation pulley to the driven pulley, a first supporting portion (4) for supporting one end portion (12a) of the outer cable in the vicinity of one of the pulleys, a second supporting portion (B2) located in the vicinity of the other of the pulleys for supporting the other end portion of the outer cable in a longitudinal direction, a biasing device (20) for biasing the other end portion (12b) of the outer cable (12) to one end portion (12a) of the outer cable, and a ratchet mechanism (21) for preventing the other end portion (12b) of the outer cable from moving in a direction opposite to a biasing direction.

## Description

### Field of the Invention

The present invention relates to a cable moving member operation device configured to operate a moving member by using a control cable.

### BACKGROUND

A vehicular air-conditioning device installed in, for example, an automobile, includes a rotary door (moving member) for adjusting an opening degree of an air mass opening of a heater unit and also a rotary knob for switching a blowing mode to a vehicle interior. A cable moving member operation device is known for mechanically transferring the turning of rotary knob to the rotary door via a control cable.

The cable moving member operation device includes an operation pulley which rotates relative to the turning of rotary knob, a driving pulley provided in a rotation shaft of the rotary door and a flexible cable which interlocks both of the pulleys.

The flexible cable comprises a pair of flexible tubular outer cables (made of resin) and control cables each of which is inserted into each of the outer cables in a slidable manner. The both end portions of each of the outer cables are retained by first and second supporting members, respectively, in the vicinity of both of the pulleys. The both end portions of each of the control cables are wound around both of the pulleys and retained by both of the pulleys.

Each of the control cables generally comprises a member having flexibility, for example, a twisted wire comprising a number of steel wires, such that its slidability does not deteriorate when bending on the way of path.

However, the twisted wire has a property which tightens and stretches by repeatedly pulling the wire. If the control cables stretches, allowance is produced between the both end portions of the control cables and the pulleys; thus, the rotation of the operation pulley is not well transferred to the driving pulley.

In order to solve the above problem, there is a known cable moving member operation device configured to eliminate the deflection caused by the stretching of control cables by means of retaining one end portion of an outer cable to a first supporting portion and retaining the other end portion of the outer cable to a second supporting portion in a movable manner in the longitudinal direction, and also biasing the other end portion of the outer cable toward one end portion of the outer cable by a sagging protection spring (for example JP2004-210188A).

However, in case that the load from the moving member is large, if the spring force of sagging protection spring is not larger than the load, the other end portion of outer cable is pushed back against the spring force of sagging protection spring by the operation force, and it is considered that the operation force is not accurately transferred to the moving member.

In addition, since the outer cable is made of a resin, it has the stretching amount much larger than that of the control cable made of copper wires. Accordingly, a problem is caused, which is similar to the case that the control cables are stretched by the contraction of outer cable.

### SUMMARY

It is, therefore, an object of the present invention to provide, regardless of size of load by a moving member and size of a biasing force of a biasing device for sagging protection, which biases an end portion of outer cable, a cable moving member operation device, which can prevent the end portion of outer cable from being pushed back in a direction opposite to a biasing direction by an operation force and can securely prevent a control cable from sagging with the contraction of outer cable.

In order to achieve the above object, the present invention is directed to a cable moving member operation device, comprising: an operation pulley; a driven pulley for interlocking with a moving member; a flexible tubular outer cable, both end portions thereof being disposed in the vicinity of both of the pulleys, respectively; a control cable inserted into the outer cable in a slidable manner for transferring rotation of the operation pulley to the driven pulley; a first supporting portion for supporting one end portion of the outer cable in the vicinity of one of the pulleys; a second supporting portion located in the vicinity of the other of the pulleys for supporting the other end portion of the outer cable in a movable manner in a longitudinal direction; and a biasing device configured to bias the other end portion of the outer cable to one end portion of the outer cable, wherein a ratchet mechanism for preventing the other end portion of the outer cable from moving in a direction opposite to a biasing direction by the biasing device is disposed between the other end portion of the outer cable and the second supporting portion.

### Brief Description of the Drawings

FIG. 1 is a lateral view showing a cable moving member operation device according to the present invention.
FIG. 2 is a right lateral view showing the cable moving member operation device in FIG. 1.
FIG. 3 is a cross-section view along C1-C1 line in FIG. 2.
FIG. 4 is a partial cross-section view along D1-D1 line in FIG. 3.
FIG. 5 is a partial cross-section view long D2-D2 line in FIG. 3.
FIG. 6 is a cross-section view along A1-A1 line in FIG. 1.
FIG. 7 is a cross-section view along A2-A2 line in FIG. 6.
FIG. 8 is a cross-section view along A3-A3 line in FIG. 6.
FIG. 9 is a partial cross-section view of a second pulley supporting member along A4-A4 line in FIG. 8.
FIG. 10 is a cross-section view along A4-A4 line in FIG. 8.
FIG. 11 is a perspective view of a ratchet pawl member shown in FIGs. 6-10.

### DESCRIPTION OF THE PREFERRED EMBODIMENT

Hereinbelow, an embodiment of the present invention will be explained with reference to the drawings.

### [Structure]

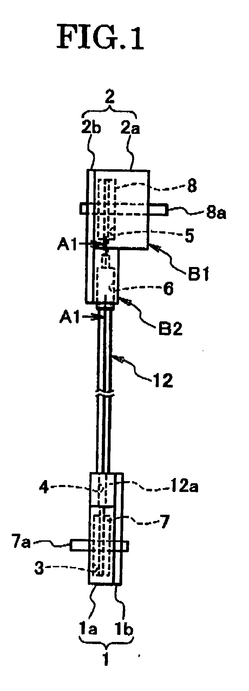

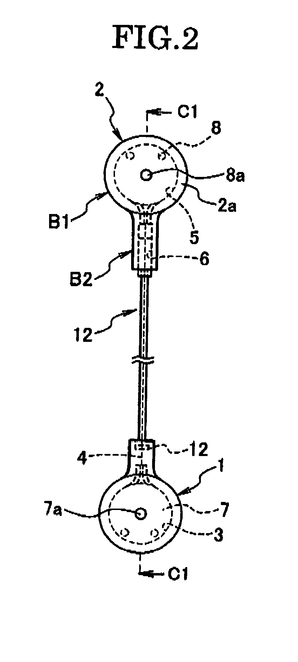

FIG. 1 illustrates a cable moving member operation device used for opening and closing operation of an air-mix door (moving member) or the like provided in a vehicular air-conditioning device (not shown), for example. FIG. 2 illustrates a right side view of the cable moving member operation device in FIG. 1

The cable moving member operation device includes a first pulley supporting member 1 and a second pulley supporting member 2 as shown in FIGs. 1, 2.

The first pulley supporting member 1 includes a supporting member body 1a and a cover member 1b. The second pulley supporting member 2 includes a supporting member body 2a and a cover member 2b. In addition, the supporting member body 2a includes a pulley supporting portion B1 and a cable retaining portion B2 as illustrated in FIGs. 1, 2.

A circular pulley placement space 3 and a cable retaining hole 4 are formed between the supporting member body 1a and the cover member 1b. A circular pulley placement space 5 is formed between the pulley supporting portion B1 of the supporting member body 2a and the cover member 2b. A cable retaining hole 6 having a square hole shape is formed between the cable retaining portion B2 of the supporting member body 2a and the cover member 2b.

Moreover, the cable retaining portion B2 of supporting member body 2a is formed in a U-shape in cross-section comprising side walls 2a1, 2a2 opposed to each other and a linking wall 2a3 for linking the side walls 2a1, 2a2. Furthermore, a circular arc groove 2a4, which faces the substantial center between the side walls 2a1, 2a2 and extends in a direction that the cable retaining hole 6 extends, and a key groove 2a5, which opens in the center of circular are groove 2a4 and is disposed to extend in a direction that the circular shape groove 2a4 extends, are formed in the linking wall 2a3 for linking the side walls. A circular arc groove 2b1 opposed to the circular arc groove 2a4 is formed in the cover member 2b.

A driven pulley 7 is rotatably disposed in the pulley placement space 3, and a driving pulley 8 is rotatably disposed in the pulley placement space 5. In addition, a pulley shaft (rotation shaft) 7a integrated with the driven pulley 7 is retained by the supporting member body 1a and the cover member 1b in a rotatable manner and a pulley shaft (rotation shaft) 8a integrated with the driving pulley (operation pulley) 8 is retained by the supporting member body 2a and the cover member 2b in a rotatable manner.

Moreover, the second pulley supporting member 2 is disposed in an instrument panel (not shown) of vehicle, for example. A rotary knob for adjusting temperature (not shown) is attached to the pulley shaft 8a retained by the second pulley supporting member 2. This rotary knob (not shown) is provided in the instrument panel of vehicle or the like, so as to be operatable in the vehicle interior.

Furthermore, the first pulley supporting member 1 is attached to a body of vehicular air-conditioning device (not shown). For example, the air-mix door (moving member) of vehicular air-conditioning device (not shown) interlocks with the pulley shaft 7a retained by the first pulley supporting member 1.

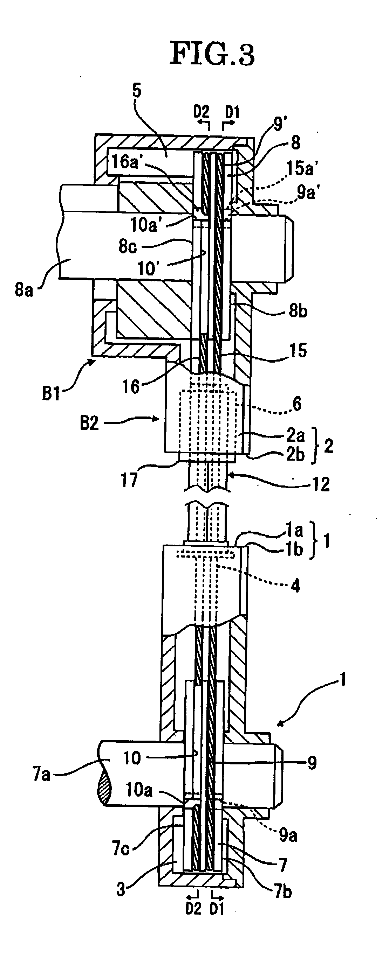

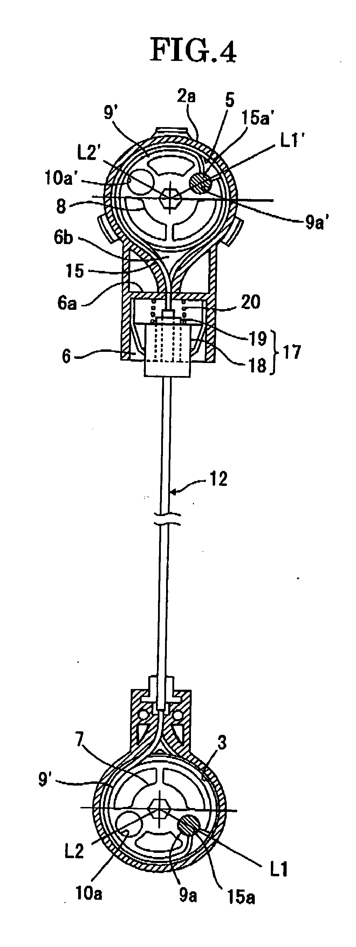

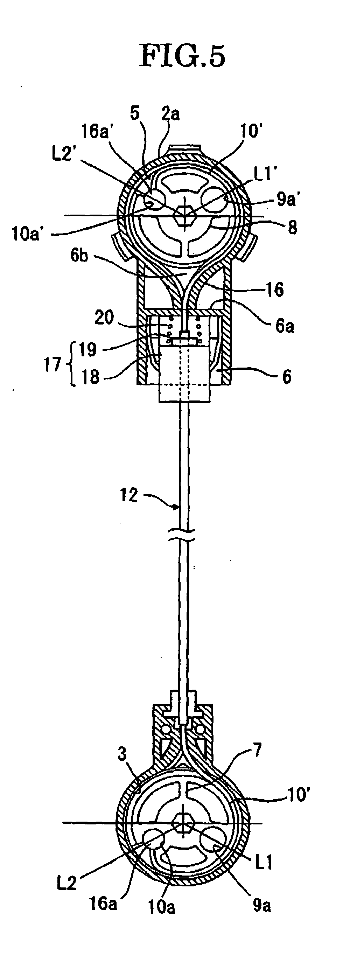

Moreover, two cable winding grooves 9, 10 are formed in the driven pulley 7 as shown in FIG. 3. Also, a locking hole 9a having a cutout circle shape, which opens up to one side face 7a and the cable winding groove 9, and a locking hole 10a having a cutout circle shape (the same as the locking hole 9a), which opens up to the other side face 7c and the cable winding groove 10, are formed in the driven pulley 7 as illustrated in FIG. 3 (reference to FIGs. 4, 5). As illustrated in FIGs. 4, 5, a line connecting the center of locking hole 9a with the center of driven pulley 7 is adopted as a first virtual line L1, and a line connecting the center of locking hole 10a with the center of driven pulley 7 is adopted as a second virtual line L2. An angle between the first virtual line L1 and the second virtual line L2 is set about 120° on the sharp angle side.

Two cable winding grooves 9', 10' are formed in the driving pulley 8 as shown in FIG. 3. Also, a locking hole 9a having a cutout circle shape, which opens up to one side face 8b and the cable winding groove 9', and a locking hole 10a' having a cutout circle shape (the same as the locking hole 9a'), which opens up to the other side face 8c and the cable winding groove 10', are formed in the driving pulley 8 as shown in FIG. 3 (reference to FIGs. 4, 5). As illustrated in FIGs. 4, 5, a line connecting the center of locking hole 9a' and the center of driving pulley 8 is adopted as a first virtual line L1' and a line connecting the center of locking hole 10a' and the center of driving pulley 8 is adopted as a second virtual line L2'. An angle between the first virtual line L1' and the second virtual line L2' is set about 120° on a sharp angle side.

As illustrated in FIGS. 1, 2, the cable moving member operation device includes a tubular outer cable 12 made of a flexible resin as a cable retaining member. One end portion 12a of the outer cable 12 is disposed in the vicinity of the driven pulley 7 and also is fastened (held) into the cable supporting hole 4 of the first pulley supporting member 1.

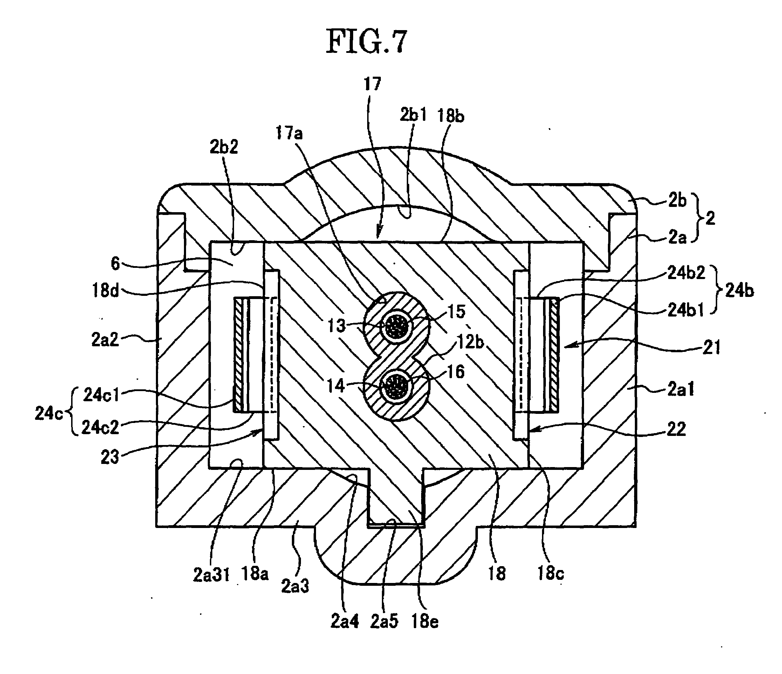

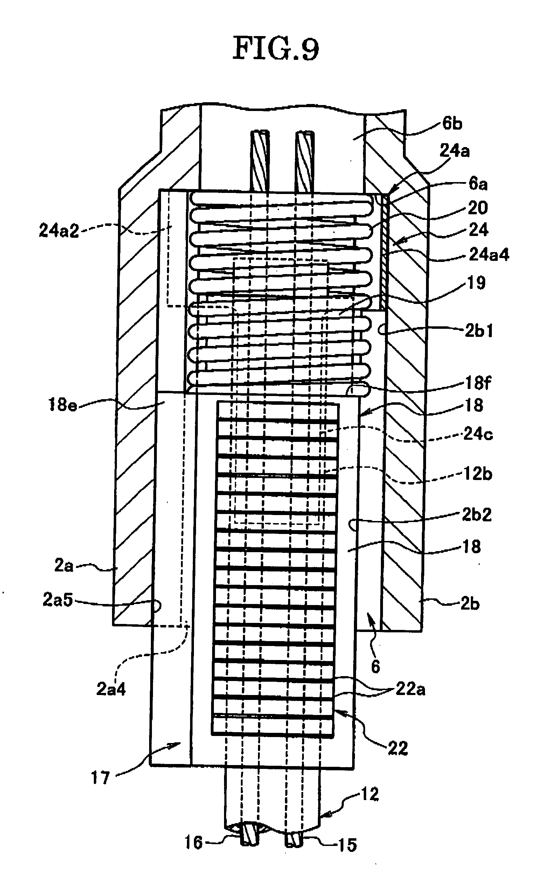

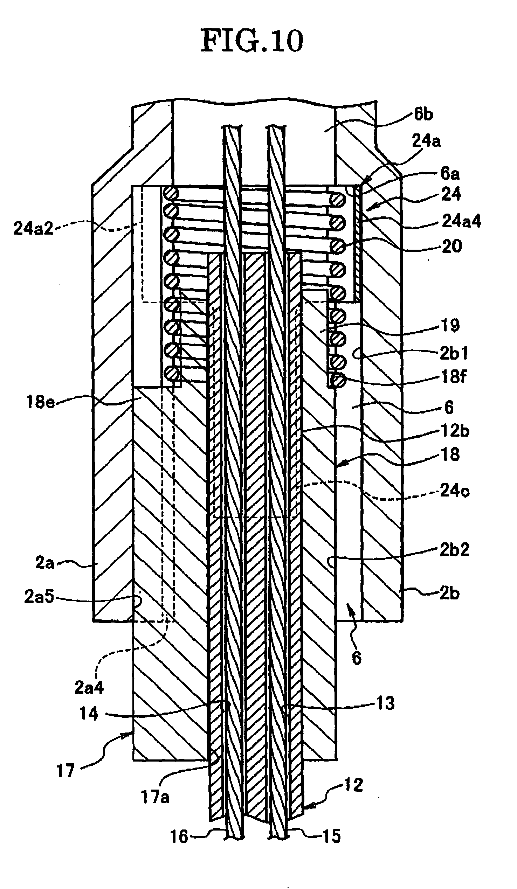

The outer cable, as illustrated in FIGs. 7-10, includes two cable insertion holes 13, 14 each of which opens up to the both ends in the longitudinal direction. A control cable 15 is inserted into the cable insertion hole 13 and a control cable 16 is inserted into the cable insertion hole 14. Each of the control cables 15, 16 comprises a twisted wire or the like which is formed by twisting a number of piano wires.

A cylindrical shaft to be locked 15a is integrated with one end portion of the control cable 15 as illustrated in FIGs. 3, 4. A cylindrical shaft to be locked16a is integrated with one end portion of the control cable 16 as illustrated in FIGs. 3, 5. The shaft 15a is fitted to the locking hole 9a having a cutout circle shape in a rotatable manner and in a non-lockable manner in the radial direction as shown in FIG. 4. The locked shaft 16a is fitted to the locking hole 10a having a cutout circle shape in a rotatable manner and in a non-lockable manner in the radial direction as shown in FIG. 5. One end portion sides of the control cables 15, 16 are wound to the cable winding grooves 9, 10, respectively, at about half around toward directions opposite to each other.

In addition, shafts to be locked 15a', 16a are disposed in the other end portions of the control cables 15, 16, respectively, and the shafts 15a', 16a' are fitted to the locking holes 9a', 10a' each having a cutout circle shape, respectively, as shown in FIGs. 4, 5, in a rotatable manner and in a non-lockable manner in the radial direction. The other end portion sides of the control cables 10, 11 are wound to the cable winding grooves 9', 10', respectively, at about half around toward directions opposite to each other.

The other end portion 12b of outer cable 12 is inserted into an insertion hole 17a of a spring receiving member 17 made of a resin. The spring receiving member 17 is fastened to the other end portion 12b of outer cable 12 by bonding or heat sealing, and also inserted into the cable retaining hole 6 of the second supporting member 2 in a movable manner.

A spring receiving wall 6a is provided in the supporting member body 2a of the second supporting member 2. The spring receiving wall 6a is located at the end of the cable retaining hole 6 on the pulley placement space 5 side as shown in FIGs. 4, 5. A guide hole 6b is formed in the spring receiving wall 6b, which opens up to the pulley placement space 5 and the cable retaining hole 6. The guide hole 6 is formed to become a circular arc shape toward the pulley placement space 5 side. Each of the other end sides of the control cables 15, 16 is inserted to the pulley placement space 5 side via the guide hole 6b, and 8 then is wound to each of the cable winding grooves 9', 10' of the driving pulley 8 as described above.

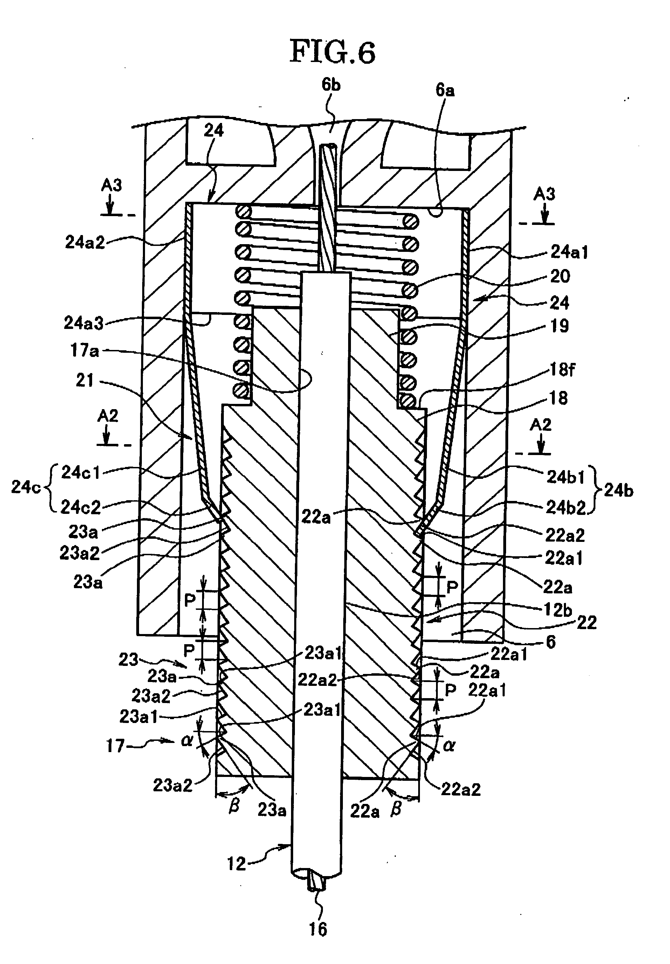

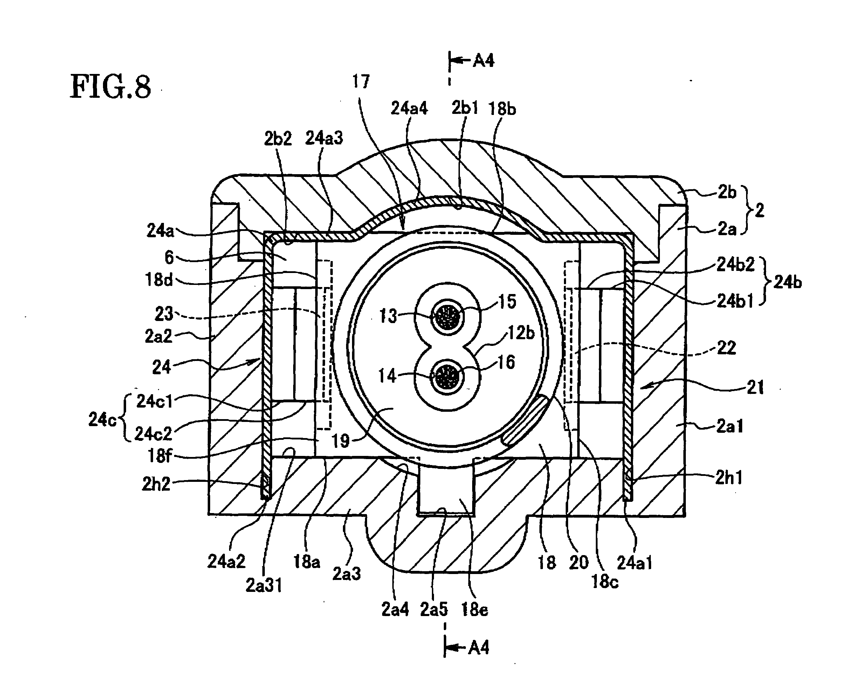

The spring receiving member 17, as shown in FIGs. 7, 8, includes a rectangular column portion 18 disposed in the cable retaining hole 6 in a movable manner in a direction that the control cables 15, 16 extend, and a cylindrical spring retaining projection 19 integrated with the rectangular column portion 18 as shown in FIGs. 6, 8-10. The spring retaining projection 19 is disposed in the center of an end face (spring bearing face) 18f of the rectangular column portion 18 to project from the end face 18f positioned on the spring receiving side 6 toward the spring receiving wall 6a.

As shown in FIGs. 6, 7, the rectangular column portion 18 includes side walls 18a, 18b, which engage with an inner face 2a31 of the linking wall 2a3 of the supporting member body 2a and an inner face 2b2 of the cover member 2b, respectively, in a slidable manner or face at intervals the inner face 2a31 of linking wall 2a3 of the supporting member body 2a and the inner face 2b2 of the cover member 2b, respectively, and side faces 18c, 18d, which face at intervals the side walls 2a1, 2a2 of the supporting member body 2a, respectively.

A projection (key) 18e which engages with the key groove 2a5 of linking wall 2a3 in a slidable manner is integrally formed in the side face 18a of the rectangular column portion 18. The projection 18e is formed along the rectangular column portion. The rectangular column portion 18 is thereby controlled so as not to approach and separate relative to the side walls 2a1, 2a2, and the intervals between the rectangular column portion 18 and the side walls 2a1, 2a2 arc accordingly stabilized.

As shown in FIGs. 6, 9, 10, a coil spring 20 is disposed between the end face (spring receiving face) 18f of the rectangular column portion 18 and the spring receiving wall 6a as a biasing device. The spring retaining projection 19 is inserted into the coil spring 20 and also the control cables 15, 16 are inserted to the coil spring 20. Accordingly, the other end portion 12b of the outer cable 12 and the spring receiving member 17 are biased by the coil spring 20 toward one end side of the outer cable 12; thus, the sagging of control cables 15, 16 is eliminated.

Moreover, a ratchet mechanism 21 as illustrated in FIGs. 6-10 is disposed between the cable retaining portion B2 and the rectangular column portion 18.

This ratchet mechanism 21 includes locking tooth rows 22, 23 and a ratchet pawl member 24 comprising a flat spring. As shown in FIG. 6, the locking tooth row 22 includes a number of locking teeth 22a arranged in saw-tooth appearance at equal pitches in the longitudinal direction of the outer cable 12. The locking tooth row 23 includes a number of locking teeth 23a arranged in saw-tooth appearance at equal pitches in the longitudinal direction of outer cable 12.

As shown in FIG. 6, each of the locking teeth 22a includes a locking face 22a1 and an engaging face 22a2, and each of the locking teeth 23a includes a locking face 23a1 and an engaging face 23a2. An inclined angle α of the locking face 22a1 relative to the face orthogonal to the side face 18c is about 10°. An inclined angle β of the engaging face 22a2 relative to the side face 18d is about 30°, An inclined angle α of the locking face 23a1 relative to the face orthogonal to the side face 18d is about 10°. An inclined angle β of the engaging face 23a2 relative to the side face 18d is about 30°. In addition the inclined angles α, β are 10 not limited to those values.

As shown in FIG. 8, locking holes 2h1, 2h2, which are located on the portions of side wall 2a1, 2a2 sides, respectively, and on the spring receiving wall 6a side to open up to the cable retaining hole 6, are formed in the linking wall 2a3 of the supporting member body 2a.

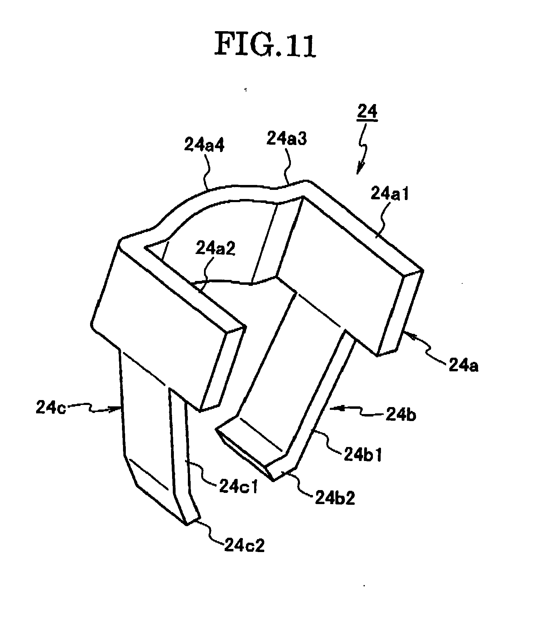

Moreover, the ratchet pawl member 24 includes a plate-like base 24a and ratchet pawls 24b, 24c as shown in FIG. 11. The plate-like base 24a is formed in substantial U-shape comprising opposed plate portions 24a1, 24a2 and a linking plate portion 24a3 integrated with one end of each of the opposed plate portions 24a1, 24a2.

The other end portion of opposed plate portion 24a1 is fitted to the locking hole 2h1 of the linking wall 2a3 and the other end portion of opposed plate portion 24a2 is fitted to the locking hole 2h2 of the linking wall 2a3 as illustrated in FIG. 8. Moreover, the opposed plate portion 24a1 has contact with the side walls 2a1 of the supporting member body 2a and the opposed plate portion 24a2 has contact with the side wall 2a2 of the supporting member body 2a. Furthermore, a projection 24a4, which swells in a circular arc shape on a side opposite between the opposed plate portions 24a1, 24a2, is formed in the linking plate portion 24a3. The projection 24a4 has contact with a circular arc groove 2b1 of the cover member 2b.

As illustrated in FIG. 11, the ratchet pawl 24b includes an inclined arm portion 24b1 and a pawl portion 24b2 linked to the leading edge of inclined arm portion 24b1. Also, as illustrated in FIG. 11, the ratchet pawl 24c includes an inclined arm portion 24c1 and a pawl portion 24c2 linked to the leading end of the inclined arm portion 24c1. The inclined arm portion 24b1 and the inclined arm portion 24c1 incline 11 in a direction coming close to each other.

The leading end portions of the pawl portions 24b2, 24c2 face the locking tooth rows 22, 23, respectively, in about the same depth positions in the depth direction of the cable supporting hole 6. The leading end portion of the pawl portion 24b2 has contact with the engaging face 22a2 of one of the locking teeth 22a by own spring force, and also the leading end portion of pawl portion 24c2 has contact with the engaging face 23a2 of one of the locking teeth 23a by own spring force.

Furthermore, the leading ends of pawl portions 24b2, 24c2 are misaligned at P/2, about half the length (measurement) of arrangement pitch P of the locking teeth 22a, 23a (interval between apexes or interval between valleys of locking teeth 22a, interval between apexes or interval between valleys of locking teeth 23a) in the depth direction of cable retaining hole 6. More particularly, if the arrangement pitch of locking teeth 22a, 23a is 1mm, the leading ends of pawl portions 24b2, 24c2 are misaligned at 0.5mm in the depth direction.

As a result, in FIG. 6, the pawl portion 24b2 of ratchet pawl 24b is locked to the locking face 22a1 of a number of locking teeth 22a, and the pawl portion 24c2 of ratchet pawl 24c is floated at 1/2 pitch (P/2) from the locking face 23a1 of a number of locking teeth 23a. In addition, when the pawl portion 24c3 of ratchet pawl 24c is locked to the locking face 23a1 of a number of locking teeth 23a, the pawl portion 24b of ratchet pawl 24b is floated at 1/2 pitch (P/2) from the locking face 22a1 of a number of the locking teeth 22a. Accordingly, the pawl portions 24b2, 24c2 are alternately locked to the locking faces 22a1, 23a1 as described above.

### (Operation)

Next, operation of the cable moving member operation device having the above structure will be explained.

If the rotary knob (not shown) is turned to rotate the driving pulley 8, the rotation of driving pulley 8 is transferred to the driven pulley 7 via the control cables 15, 16. Then, the air-mix door of vehicular air-conditioning device (not shown), which works with the driven pulley 7, is opened and closed, and the air which is blasted from an air outlet (not shown) of the vehicular air-conditioning device is accordingly adjusted.

When the control cables 15, 16 gradually stretch along the above operation, the spring receiving member 17 is moved to the opening end side of cable retaining hole 6 (one end side of outer cable 12) by the coil spring 20, and the other end portion 12b is moved to one end side of outer cable 12; thus, the sagging of control cables 15, 16 is eliminated.

In addition to the above stretch of the control cables 15, 16, the stretching amount along the temperature change and temporal change of the resin outer cable 12 is larger than the stretch of control cables 15, 16 at single digit. Also, when the resin outer cable 12 is contracted, the control cables 15, 16 tend to sag. However, the spring receiving member 17 is moved to the opening end side (one end side of outer cable 12) of cable retaining hole 6 by the coil spring 20, and the other end portion 12b of outer cable 12 is moved toward one end side of the outer cable 12; thus, the sagging of control cables 15, 16 is eliminated.

In operation of vehicular air-conditioning device, depending on the rotation direction of air-mix door (not shown), the load for rotating the air-mix door sometimes becomes larger than the spring force of coil spring 20 by the air flow acting on the air-mix door or the like. 13

Due to the above load, the other end portion 12b of outer cable 12 tends to move to the spring receiving wall 6a side against the spring force of coil spring 20 along the turning of rotary knob.

In this case, the pawl portion 24b2 of ratchet pawl 24b is locked to the locking face 22a1 of one of the locking teeth 22a of the locking teeth row 22, or the pawl portion 24c2 of the ratchet pawl 24c is locked to the locking face 23a1 of one of the locking teeth 23a of the locking tooth row 23. Thus, the other end portion 12b of outer cable 12 is prevented from moving to the spring receiving wall 6a side. Such movement is prevented every half pitch (1/2) of the arrangement pitch P of locking tooth rows 22, 23. If the control cables 15, 16 stretch, the movement can be controlled every stretching measurement.

As described above, if the load for rotating the air-mix door becomes larger than the spring force of coil spring 20, the sagging of control cables 15, 16 are prevented by preventing the movement of the other end portion 12b of the outer cable 12 to the spring receiving wall 6a side when turning the rotary knob. Therefore, the turning of rotary knob is accurately transferred to the air-mix door, and the opening degree of air-mix door can be precisely adjusted.

Furthermore, as illustrated in FIG. 6, for example, when the pawl portion 24b2 of the ratchet pawl 24b is locked to the locking face 22a1 of the locking teeth 22a, a force is act on the locking face 22a1 in a direction along the locking face 22a2 and also in a direction toward the center side of the spring receiving member 17 from the pawl portion 24b2. Therefore, it is possible to prevent the defect of locking teeth 22a by the force acting between the pawl portion 24b and the locking plane 22a1 when the rotation of air mix door by the rotary knob (not shown) is 14 operated.

As described above, the cable moving member operation device according to the embodiment of the present invention comprises the operation pulley (driving pulley 8), the driven pulley 7 for interlocking with the moving member (air-mix door), the flexible tubular outer cable (12) having both end portions disposed in the vicinity of both of the pulleys (7, 8), respectively, the control cable (15, 16) inserted into the outer cable in a slidable manner for transferring rotation of the operation pulley (driving pulley 8) to the driven pulley 7, the first supporting portion (cable retaining hole 4) for supporting one end portion 12a of the outer cable 12 in the vicinity of one of the pulleys (driven pulley 7), a second supporting portion (cable retaining hole B2) located in the vicinity of the other (driving pulleys 8) of the pulleys (7, 8) for supporting the other end portion 12b of the outer cable 12 in a movable manner in a longitudinal direction, and a biasing device (coil spring 20) configured to bias the other end portion 12b of the outer cable 12 to one end portion 12a of the outer cable 12. Moreover, the ratchet mechanism 21 for preventing the other end portion 12b of the outer cable 12 from moving to a direction opposite to a biasing direction by the biasing device (coil spring 20) is disposed between the other end portion 12b of the outer cable 12 and the second supporting portion (cable retaining portion B2).

According to the above structure, if the control cable 15, 16 is stretched with use, the other end portion 12b of outer cable 12 is moved to one end portion 12a side by the biasing device (coil spring 20) according to the stretching. Even if movement force in a direction opposite to the biasing direction of the biasing device (coil spring 20) acts on the other end portion 12b of outer cable 12 by the operation force, the ratchet mechanism 21 prevents the other end portion 12b of outer cable 12 from moving in a direction opposite to the biasing direction by the biasing device (coil spring 20). As a result, regardless of the size of load by the moving member (air mix door) and the size of biasing force of the biasing device for sagging protection, which biases the end portion of outer cable, it is possible to prevent the end portion of outer cable 12 from being pushed back in a direction opposite to the biasing direction by the operation force.

Moreover, the sagging of control cable with the contraction of outer cable can be securely prevented.

Moreover, in the cable moving member operation device according to the embodiment of the present invention, the ratchet mechanism 21 includes the locking teeth row 22, 23 provided in the other end portion of the outer cable, having a number of locking teeth 22a, 23a arranged in a saw-tooth appearance in the longitudinal direction of the outer cable, and a plurality of ratchet pawls 24b, 24c retained by the second supporting portion (cable retaining portion B2), each having the leading end portion for engaging with any one of the number of locking teeth 22a, 23a, and the leading end portions of the plurality of ratchet pawls 24b, 24c have positions misaligned in the longitudinal direction of the outer cable 12, such that the leading end portions of the ratchet pawls 24b, 24c engage with the locking teeth 22a, 23a in series.

According to the above structure, the moving control with fine dimension can be performed by the simple structure.

Furthermore, in the cable moving member operation device according to the embodiment of the present invention, the second supporting portion (cable retaining member B2) includes the cable retaining hole 6 having the pawl supporting walls (side walls 2a1, 2a2) opposed to each other, the other end portion 12b of the outer cable 12 is disposed in the cable retaining hole 6, and the plurality of ratchet pawls 24b, 24c is formed by a plate spring and includes the plate-like base 24a having contact with the inner faces of the pawl supporting walls (side walls 2a1, 2a2).

According to the above structure, the plurality of ratchet pawls 24b, 24c are stably supported.

In addition, in the cable moving member operation device according the embodiment of the present invention, the biasing device (coil spring 20) comprises the coil spring 20 disposed between the end wall (spring receiving wall 6a) of the cable retaining hole 6 and the other end portion 12b of the outer cable 12 opposed to the end wall (spring receiving wall 6a). The cable retaining hole 6 has the linking wall 2a3 for linking the pawl supporting walls (side walls 2a1, 2a2) opposed to each other, and the linking wall 2a3 includes the circular arc groove 2a4 forming a space for disposing the coil spring.

According to the above structure, the cable retaining member B2 can be downsized

Moreover, in the cable moving member operation device according to the embodiment of the present invention, the linking wall 2a3 includes the guide groove (key groove 2a5) extending parallel to an axis line of the other end portion 12b of the outer cable 12, and the guide projection (projection 18e) engaging with the guide groove (key groove 2a5) in a slidable manner is integrally formed in the other end portion 12b of the outer cable 12.

According to the above structure, the movement of the other end portion 12b of the outer cable 12 in a direction crossing with the outer cable is controlled, so the ratchet mechanism 21 can be prevented from being disabled.

Although the present invention has been described in terms of exemplary embodiment, it is not limited thereto. It should be appreciated that variations may be made in the embodiment described by persons skilled in the art without departing from the scope of the present invention as defined by the following claims. In addition, the number, position, shape, or the like of the component are not limited to the above embodiment, and can be changed to the number, position, shape or the like of the component preferable for conducting the present invention. Moreover, no element and component in the present disclosure is intended to be dedicated to the public regardless of whether the element or component is explicitly recited in the following claims.

## Claims

1. A cable moving member operation device, comprising:
an operation pulley (8);
a driven pulley (7) for interlocking with a moving member;
a flexible tubular outer cable (12) having both end portions disposed in the vicinity of both of the pulleys, respectively;
a control cable (15, 16) inserted into the outer cable (12) in a slidable manner for transferring rotation of the operation pulley (8) to the driven pulley (7);
a first supporting portion (4) for supporting one end portion (12a) of the outer cable (12) in the vicinity of one of the pulleys;
a second supporting portion (B2) located in the vicinity of the other of the pulleys for supporting the other end portion (12b) of the outer cable in a movable manner in a longitudinal direction; and
a biasing device (20) configured to bias the other end portion (12b) of the outer cable (12) to one end portion (12a) of the outer cable (12), wherein
a ratchet mechanism (21) for preventing the other end portion (12b) of the outer cable (12) from moving in a direction opposite to a biasing direction by the biasing device (20) is disposed between the other end portion (12b) of the outer cable and the second supporting portion (B2).

2. The cable moving member operation device according to claim 1, wherein
the ratchet mechanism (21) includes a locking teeth row (22, 23) provided in the other end portion (12b) of the outer cable (12), having a number of locking teeth (22a, 23a) arranged in a saw-tooth appearance in the longitudinal direction of the outer cable, and a plurality of ratchet pawls (24b, 24c) retained by the second supporting portion (B2), each having a leading end portion for engaging with any one of the number of locking teeth, and
the leading end portions of the plurality of ratchet pawls (24b, 24c) have positions misaligned in the longitudinal direction of the outer cable, such that the leading end portions of the ratchet pawls (24b, 24c) engage with the locking teeth (22a, 23a) in series.

3. The cable moving member operation device according to claim 2, wherein the second supporting portion (B2) includes a cable retaining hole (6) having pawl supporting walls (2a1, 2a2) opposed to each other, the other end portion (12b) of the outer cable (12) is disposed in the cable retaining hole (6), and the plurality of ratchet pawls (24b, 24c) is formed by a plate spring and includes a plate-like base (24a) having contact with inner faces of the pawl supporting walls (2a1, 2a2).

4. The cable moving member operation device according to claim 3, wherein the biasing device (20) comprises a coil spring disposed between an end wall (6a) of the cable retaining hole (6) and the other end portion (12b) of the outer cable (12) opposed to the end wall (6a), the cable retaining hole (6) has a linking wall (2a3) for linking the pawl supporting walls (2a1, 2a2) opposed to each other, and the linking wall (2a3) includes a circular arc groove (2a4) forming a space for disposing the coil spring.

5. The cable moving member operation device according to claim 4, wherein the linking wall (2a3) includes a guide groove (2a5) extending parallel to an axis line of the other end portion (12b) of the outer cable (12), and a guide projection (18e) engaging with the guide groove (2a5) in a slidable manner is integrally formed in the other end portion (12b) of the outer cable (12).
